# EUROPÄISCHE PATENTANMELDUNG

(11) **EP 0 829 519 A1**
(43) Veröffentlichungstag der Anmeldung: **18.03.1998**
(21) Anmeldenummer: 97114959.6
(22) Anmeldetag: 29.08.1997
(51) Int. Cl.: C08L 97/02, C08L 3/02, B65D 65/46

(54) **Verfahren zum Herstellen von kompostierbaren Formkörpern und Pellets hierfür**

(30) Priorität: 14.09.1996 DE 19637565
(71) Anmelder: NATURALIS AG, CH-6340 Baar (CH)
(72) Erfinder: Schaible, Thomas, 5733 Leimbach /AG (CH); Fritschi, Hugo, 8730 Uznach (CH)
(74) Vertreter: Müller-Gerbes, Margot, Dipl.-Ing.

(57) **Zusammenfassung**

Die Erfindung betrifft ein Verfahren zum Herstellen von kompostierbaren Formkörpern insbesondere zur Verwendung als Einmalartikel für Verpackungszwecke bzw. Bedarfsgegenstände aus einem vorwiegend pflanzliche und natürliche Rohstoffe enthaltenden Komponentengemisch, aus dem Pellets gebildet werden und die Pellets unter Anwendung von Druck und Wärme zu Formkörpern verarbeitet werden, bei dem folgendes Komponentengemisch eingesetzt wird:
A. 20 - 60 Gew.-% zellulosehaltige pflanzliche Fasern und/oder zellulosehaltige pflanzliche Abfall- bzw. Verarbeitungsrückstände in zerkleinerter Form
B. 1 - 20 Gew.-% modifizierte biologisch abbaubare thermoplastisch verarbeitbare Naturrohstoffe, insbesondere auf Basis von Stärke oder Dicarbonsäuren oder Polyolen, Polyhydroxycarbonsäuren oder Lactid-Polymeren
C. 10 - 45 Gew.-% Harze und/oder Wachse auf natürlicher Basis sowie gegebenenfalls mineralische Stoffe in zerkleinerter Form und/oder Kornform bzw. Staubform, Weichmacher mit hygroskopischen Eigenschaften, Farbmittel und Trennmittel auf natürlicher Basis,
und die aus den dem Komponentengemisch hergestellten Pellets unter Erwärmung auf eine Temperatur von etwa 120 bis 160 °C zu den Formkörpern verarbeitet werden, die eine hohe Wasserfestigkeit aufweisen.

## Beschreibung

Die Erfindung bezieht sich auf ein Verfahren zum Herstellen von kompostierbaren Formkörpern insbesondere zur Verwendung als Einmalartikel für Verpackungszwecke bzw. Bedarfsgegenstände im Haushaltswarenbereich und als Behältnisse, bei dem ein vorwiegend natürliche und/oder pflanzliche Rohstoffe enthaltendes Komponentengemisch hergestellt wird, aus dem vorgemischten Komponentengemisch unter Verfestigung mittels einer Pelletierpresse Pellets gebildet werden und die Pellets, gegebenenfalls nach Zerkleinerung, unter Anwendung von Druck und Wärme zu Formkörpern, gegebenenfalls mit nachfolgender Aushärtung verarbeitet werden.

Des weiteren befaßt sich die Erfindung mit Pellets zum Herstellen von kompostierbaren Formkörpern insbesondere zur Verwendung als Einmalartikel für Verpackungszwecke bzw. Bedarfsgegenstände im Haushaltswarenbereich und als Behältnisse aus vorwiegend pflanzliche und/oder natürliche Rohstoffe enthaltenden Komponenten aus dem unter Verfestigung der Komponenten mittels einer Pelletierpresse die Pellets hergestellt werden, wobei die Pellets granulierbar und thermoplastisch mittels Preßform oder Schneckenpresse verarbeitbar sind. Um eine zeitlich unabhängige Herstellung von Pellets und Formkörpern aus den Pellets zu ermöglichen, ist es ein Anliegen der Erfindung, lagerfähige Pellets zu schaffen.

Aus der EP 0537110 A1 ist ein gattungsgemäßes Verfahren zur Herstellung von Formlingen aus thermoplastisch verarbeitbaren Komponentengemischen bekannt, bei dem aus vorwiegend pflanzlichen Rohstoffen mit Stärke als Bindemittel in einem ersten Verfahrensschritt Pellets mittels einer Pelletierpresse hergestellt werden, die anschließend thermoplastisch mittels Schneckenpresse oder mittels Formpreßmaschinen zu Formkörpern weiterverarbeitet werden. Hierbei können bei der thermoplastischen Verarbeitung in der Schneckenpressen den Pellets zusätzlich Fließ- und/oder Dichtmittel, wie Glycerin und/oder Kollagen zuzugeben werden. Die herstellbaren Formkörper sind als Einmalartikel oder Wegwerfartikel im Verpackungsbereich oder Bedarfsgegenständen im Haushaltswarenbereich, wie Becher, Teller, Schüsseln oder als Behältnisse für technische Produkte verwendbar. Infolge des zum Teil recht beträchtlichen Anteils an Stärke als Bindemittel neigen die gemäß EP 0537 110 hergestellten Produkte zu schneller Feuchtigkeits- und Wasseraufnahme, wodurch sie gegebenenfalls vorzeitig erweichen, und halten nur geringen mechanischen Belastungen stand.

Aus der FR 2697259 ist ein auf Amylose aufgebautes stärkehaltiges Produkt bekannt, das in Verbindung mit natürlichen Harzen sowie Härtungswasser zu Filmen, Granulat, Kapseln verarbeitet wird, wobei härtbaren Harzen, wie Bakelite, ähnliche Materialien erhalten werden. Diese harten glatten Materialien enthalten keine pflanzlichen Fasern.

Aus der JP 06010300 (Derwent Abstract 94-068396/09) ist ein geschäumtes Material, enthaltend Zellulosefasern, hohle Partikelchen, größere Mengen Weichmacher, geringe Harzzusätze zur Verbesserung der Wasserabweisung, Polysaccharadie als bioabbaubares Bindemittel und ein Schäumungsmittel bekannt, das als Substitut für Polystyrol-Schaumstoff als Verpackungsmaterial dienen soll. Dieses Material ist zwar etwas elastisch und stoßdämpfend, jedoch fehlt ihm die Stabilität und mechanische Festigkeit.

Aus der DE 44 24 419 A1 ist ein Verfahren und ein Komponentengemisch auf Basis natürlicher Rohstoffe, insbesondere auf pflanzlicher Basis einschließlich Harze und Wachse auf natürlicher Basis bekannt, mit dem kompostierbare Formkörper verbesserter mechanischer Festigkeiten mittels thermoplastischer Verarbeitung hergestellt werden können, die eine ausreichende Stabilität aufweisen, um zumindest als Einmalartikel im Verpackungsbereich, Haushaltswarenbereich und für technische Produkte eingesetzt werden zu können.

Als nachteilig bei bekannten kompostierbaren Formkörpern auf Basis pflanzlicher und natürlicher Rohstoffe ist ihre nur bedingte oder kaum vorhandene Wasserresistenz anzusehen, die einen Einsatz zum Beispiel im Außenbereich und der Witterung ausgesetzt, entgegensteht.

Der Erfindung liegt daher die Aufgabe zugrunde, pflanzliche Rohstoffe einschließlich pflanzlicher Abfallstoffe zu Formkörpern und Bedarfsartikeln des täglichen Lebens für den Einmalbedarf zu verarbeiten, die für einen längeren Zeitraum wasserfest sind, und somit auch für einen begrenzten Zeitraum der Bewitterung ausgesetzt werden können, ehe sie sich zu Kompost wandeln und zerfallen.

Erfindungsgemäß wird diese Aufgabe bei einem gattungsgemäßen Verfahren dadurch gelöst, daß ein aus folgenden Komponenten bereitetes Komponentengemisch zum Herstellen der Pellets eingesetzt wird:
A. 20 - 60 Gew.-%, vorzugsweise 25 bis 50 Gew.-% zellulosehaltige pflanzliche Fasern und/oder zellulosehaltige pflanzliche Abfall- bzw. Verarbeitungsrückstände in zerkleinerter Form
B. 1 - 20 Gew.-% modifizierte Naturrohrstoffe, die thermoplastisch verarbeitbar und biologisch abbaubar sind,
C. 10 - 45 Gew.-% Harze und/oder Wachse auf natürlicher Basis
D. 0 - 30 Gew.-% mineralische Stoffe in zerkleinerter Form und/oder Kornform bzw. Staubform
E. 0 - 10 Gew.-% Weichmacher mit hygroskopischen Eigenschaften
F. 0 - 10 Gew.-%, vorzugsweise 0,1 - 2,0 Gew.-% Farbmittel
G. 0 - 2,5 Gew.-%, vorzugsweise 0,1 - 2 Gew.-% Trennmittel auf natürlicher Basis,
und aus den Pellets bzw. zu Granulat zerkleinerten Pellets unter erneuter Erwärmung und Plastifizierung auf eine Temperatur von etwa 120 bis 160 °C Formkörper mit einer zeitlich begrenzten Wasserfestigkeit für einen dem Einwirken von Feuchtigkeit ausgesetzten Einsatz gebildet werden.

Mit dem erfindungsgemäßen Verfahren erhält man nicht nur einen festen hohe mechanische Stabilität aufweisenden Formkörper, sondern auch einen wasserfesten Formkörper, der der Bewitterung, wie Erdfeuchte, ausgesetzt, einige Wochen bis Monate Lebensdauer aufweist, ehe er zerfällt. Je nach der gewählten thermoplastischen Verarbeitungsweise der Pellets bzw. des Granulates erhält man mittels eines Extruders und Extrusionswerkzeuges ein Halbzeug in Strangform oder Plattenform oder bei Einsatz einer Schneckenpresse mit Spritzwerkzeug einen Spritzguß-Formkörper oder bei diskontinuierlicher Verarbeitung in Formpressen einen Preß-Formkörper mit hoher mechanischer Festigkeit, guter Ausformbarkeit und glatter wasserresistenter Außenhaut.

Das erfindungsgemäß eingesetzte Komponentengemisch zeichnet sich dadurch aus, daß es
- Naturharze und Naturwachse zur thermoplastischen Verarbeitung einsetzt,
- große Mengen an Fasermaterial für die mechanische Festigkeit und
- modifizierte Naturrohstoffe zur Erhöhung der Wasserfestigkeit
einsetzt.

Je höher der Faseranteil in den erfindungsgemäßen Komponentengemischen ist, desto höhere Werte von Zugfestigkeit und E-Modul werden erreicht. Mit den erfindungsgemäßen Rezepturen werden Zugfestigkeiten nach DIN 53455 von 12 bis 23 N/mm² und höher und E-Module von 3 bis 7 kN/mm² erzielt. Auch die Wasseraufnahme bei Feuchtlagerung wird so niedrig gehalten, so daß aus den erfindungsgemäßen Komponentengemischen hergestellte Produkte auch als Eßgeschirr - wobei sie mit Feuchtigkeit über einen längeren Zeitraum in Berührung kommen - geeignet sind, ohne vorzeitig zu zerfallen. Andererseits sind die Komponentengemische so aufgebaut, daß die Kompostierbarkeit ohne zusätzliche Hilfsmittel zu einem späteren Zeitpunkt gewährleistet ist.

Ausgewählte Komponentengemische, die zum Durchführen des erfindungsgemäßen Verfahrens einschließlich ausgewählter Komponenten sind den kennzeichnenden Merkmalen der Unteransprüche 2 bis 13 entnehmbar.

Die Komponente A übernimmt im wesentlichen die Aufgabe, die Stabilität des herzustellenden Formkörpers und seine Kompostierbarkeit zu sichern. Geeignete pflanzliche Fasern sind beispielsweise Fasern aus Stroh, Chinaschilf, Holzschilf, Cellulose, Bananenfasern, Hanf, Sisal, Maisstengel, Zuckerrohrstengel, die einzeln oder in Abmischungen eingesetzt werden. Auch analoge pflanzliche Fasern, die hier nicht aufgeführt sind, sind für die Erfindung anwendbar. Erfindungsgemäß werden große Mengen an pflanzlichen Fasern eingesetzt, die einen gerüstartigen Aufbau mit großer Stabilität bewirken. Ergänzend werden als Komponente A weitere pflanzliche Abfallstoffe in Verbindung mit den vorgenannten pflanzlichen Faserrohstoffen als preiswerte Füllstoffe eingesetzt, die zudem in Gegenwart von Wasser oder Feuchtigkeit das Kompostieren beschleunigen und je nach dem herzustellenden Formkörper und dessen gewünschten mechanischen Eigenschaften bzw. der Zusammensetzung der Komponente A in mehr oder weniger großer Menge in dem Komponentengemisch enthalten ist. Diese Abfallstoffe entfalten gegebenenfalls noch geringe Wirkungen eines Bindemittels, sofern sie noch einen kleinen Restgehalt an Stärke aufweisen, wie zum Beispiel Triticale. Diese Reststärkeanteile bewirken im Rahmen der Herstellung der Pellets eine Anverkleisterung der zu den Pellets verpreßten Komponenten und erleichtern die nachfolgende weitere Verarbeitung zu den Formkörpern.

Diese pflanzlichen Abfall- bzw. Verarbeitungsrückstände auf pflanzlicher Basis enthalten keine Stärke mehr oder nur noch einen Restgehalt an Stärke von bis zu höchstens 5 Gew.-%, vorzugsweise unter 2 Gew.-%. Es kommen insbesondere Verarbeitungsrückstände und Abfälle zellulosehaltiger, pflanzlicher Natur in Frage, wie sie bei der Herstellung insbesondere von Lebensmitteln anfallen, wie beispielhaft Sonnenblumenextraktions-Schrot, Kerne aus Obstrückständen, wie von Äpfeln, Birnen, Hagebutten, Trester, Schalen von Haselnüssen, Walnüssen, Mandeln. Diese Verarbeitungsrückstände sind jedoch überwiegend feuchteempfindlich, so daß Formkörper, enthaltend solche Verarbeitungsrückstände in größeren Mengen, nicht anhaltend wasserabweisung sind, sondern schneller Wasser aufnehmen und aufquellen und dann zerfallen.

Infolge der den Abfallprodukten eigenen Feinheit der Abfallpartikelchen tragen sie einerseits zum kompakten Aufbau des Endproduktes und andererseits zu seiner verbesserten Kompostierbarkeit bei.

Um die Lebensdauer der erfindungsgemäß herstellbaren kompostierbaren Formkörper bei Kontakt mit Feuchtigkeit zu verlängern und einen sofortigen Zerfall oder Minderung der Stabilität der Formkörper bei Kontakt mit Feuchtigkeit für einen längeren Zeitraum zu verhindern, wird mindestens ein modifizierter Naturrohstoff gemäß Komponente B zur Erhöhung der Wasserresistenz dem Komponentengemisch zugegeben. Geeignete modifizierte Naturrohstoffe sind dem kennzeichnenden Merkmal des Anspruches 4 entnehmbar. Da es sich bei der Komponente B um einen ausgesuchten modifizierten Naturrohstoff handelt, der ebenfalls biologisch abbaubar ist, bleibt auch der erfindungsgemäß mit höherer Wasserbeständigkeit durch Zusatz der Komponente B aus dem Komponentengemisch hergestellte Formkörper kompostierbar. Jedoch ist seine Lebenszeit, wenn er in Kontakt mit Feuchtigkeit kommt, erhöht. Es ist möglich, Formkörper, die der Bewitterung ausgesetzt werden, mit einer so hohen Wasserresistenz auszurüsten, daß sie über mehrere Monate hinweg der Bewitterung ausgesetzt bleiben können und ihre Stabilität beibehalten, ehe der Vorgang der Kompostierung mit Minderung der Stabilität bis zum Zerfall des Formkörpers einsetzt. Da das Komponentengemisch einschließlich der Komponente B gut thermoplastisch verarbeitbar sein soll, werden gegebenenfalls Verarbeitungshilfsmittel und Weichmacher in geringen Mengen zugegeben.

Insbesondere sind als Komponente B thermoplastisch verarbeitbare und biologisch abbaubare modifizierte Naturrohstoffe insbesondere auf Basis von Stärke oder Dicarbonsäuren, Polyolen, Polyhydroxycarbonsäuren oder Lactid-Polymeren vorgesehen.

Bevorzugt werden als Komponente B modifizierte Naturrohstoffe, wie Polysaccharide, Polysaccharidderivate, Polysaccharidester, modifizierte Stärke, Stärkederivate, Stärkeester, oxidierte Stärken, wie Dialdehydstärken, Carbonsäuren, Hydroxycarbonsäuren, wie Polyhydroxycarbonsäuren, Hydroxyfettsäuren, Dicarbonsäuren, Aminocarbonsäuren, Diole, Polylactid-Polymer, Polylactid-Copolymere, einzeln oder in Gemischen (Blends) eingesetzt.

Hierbei können die modifizierten Naturrohstoffe gemäß Komponente B einzeln oder auch in Abmischungen mehrerer verschiedener modifizierter Naturrohstoffe eingesetzt werden.

Als Komponente B sind beispielsweise thermoplastisch verarbeitbare biologisch abbaubare Polysaccharidderivate geeignet, wie zum Beispiel Celluloseester oder Polysaccharidester.

In der DE-OS 44 04 840 sind beispielsweise für die Erfindung geeignete thermoplastische biologisch abbaubare Polysaccharidderivate, in der DE-OS 43 26 118 thermoplastische bioabbaubare modifizierte Stärkeester und in der WO 95/04097 thermoplastische bioabbaubare modifizierte Polylactidpolymere beschrieben.

Als Komponente B können biologisch abbaubare Stärke und Stärkeester eingesetzt werden, deren Verarbeitbarkeit durch Zugabe von Weichmachern im Komponentengemisch erhöht werden kann. Als Weichmacher kommen neben den gemäß Komponente E aufgeführten auch Polyalkylenglykole, insbesondere auch die leichter biologisch abbaubaren mit niedrigeren Molmassen von 4000 g/mol und niedriger in Frage, wie Polyethylenglykol oder Polypropylenglykol oder Blockcopolymere, wie Poloxamer in Frage.

Auch Polymere auf Basis von Polylactiden eignen sich als Komponente B zum Herstellen von wasserbeständigen Komponentengemischen bzw. Formteilen aus diesen Komponetengemischen gemäß der Erfindung. Solche Polylactidpolymers können ebenso mit weiteren Polymeren als Blends eingesetzt werden, beispielsweise in Verbindung mit Polyvinylalkohol, Polycaprolactonen, Polyglykoliden, Polyglykolsäuren, wobei auch diese Blends biologisch abbaubar und kompostierbar zusammengesetzt sind. Ebenso können zur verbesserten thermoplastischen Verarbeitung und zur Herabsetzung der Sprödigkeit den biologisch abbaubaren Polylactiden bzw. Polylactidpolymeren Weichmacher zugegeben werden, insbesondere Weichmacher auf Basis von Alkyl- oder aliphatischen Estern, wie Zitronensäureester, Glycerinester sowie Ester von Dicarbonsäuren.

Je nach der Konsistenz der für eine Rezeptur eingesetzten Komponenten A und B zum Herstellen der kompostierbaren Formkörper sind Bindemittel und Verarbeitungshilfsstoffe als Fließhilfsstoffe für die thermoplastische Verarbeitung in kleinerer oder größerer Menge in Gestalt der Komponente C erforderlich. Insbesondere werden in bezug auf die Kompostierbarkeit der herzustellenden Formkörper Wachse und Harze auf natürlicher Basis vorgeschlagen, wobei diese einzeln, gegebenenfalls jedoch auch Abmischungen hiervon, einsetzbar sind. Beispielhafte Harze und Wachse, die für die Erfindung zum Einsatz kommen, sind Kolophonium und dessen Salze, Kopal, Naturkautschuk, Schellack, Carnaubawachs, Dammarharz, Japanwachs, Candelillawachs, Chicle-Gum, Mastix. Bevorzugt werden solche Harze bzw. Wachse eingesetzt, die einen niedrigen Erweichungspunkt, vorzugsweise unter 125°C bzw. einen niedrigen Schmelzpunkt von unter 90°C aufweisen.

Schellack hat beispielsweise einen Schmelzpunkt von 65 bis 85 °C, Carnaubawachs von 83 bis 86 °C, Candelillawachs von 68 bis 70 °C, Japanwachs von 51 bis 55°C. Die Erweichungspunkte von Kollophonium liegen bei 70 bis 80°C, Mastix bei 105 bis 120 °C. Schellack wird wegen seiner Geruchlosigkeit bevorzugt für mit Lebensmittel in Berührung kommende Produkte, wie Geschirr, eingesetzt. Von den übrigen Harzen werden bevorzugt Kopal und Dammarharz eingesetzt.

Die Komponente C dient teilweise auch der Erhöhung der wasserabweisenden Eigenschaften des herzustellenden Formkörpers. Je höher der Harzanteil, desto wasserabstoßender ist das Endprodukt. Generell vertragen sich die Harze gemäß Komponente C und die Weichmacher, d.h. die Komponente E, nur gering, d.h. sie haben gegeneinander gerichtete Eigenschaften.

Die Komponente D, die mineralischen Stoffe, werden insbesondere als Füllstoff, gegebenenfalls als Fließhilfsstoffe zugesetzt, wobei hier preiswerte inerte Materialien, wie Silikate, Kalk, Glimmer, Glasperlen, Talkum, Calcium-Carbonat, Quarzsand, Aluminiumoxid, Schiefer u.a. einzeln oder in Abmischungen eingesetzt werden.

Je höher der Mineralstoffanteil, umso schwerer ist das Endprodukt, d.h. der herzustellende Formkörper. Je feiner die Mineralstoffe vermahlen sind, desto besser ist ihre Fließwirkung.

Der Zusatz von Weichmachern, Komponente E dient der Flexibilisierung des herzustellenden Produktes. Je höher der Weichmacheranteil, umso weicher ist das Endprodukt. Weichmacher gehen vor allem mit Faser- und Füllstoffen Wechselwirkungen ein. Bevorzugte Weichmacher sind zum Beispiel Glycerin, Wasser, Butandiol, Zucker, D-Sorbit, Xylit, Citrate, Phosphate. Bei der Zugabe von Weichmacher werden die Fasern flexibler. Das Wasser verdunstet schnell. Glycerin verbleibt an den Fasern und hält sie flexibel. Sollen Formkörper hoher Festigkeit hergestellt werden, geht der Weichmacheranteil gegen Null.

Weichmacher können auch in Abmischungen eingesetzt werden.

Zur Farbgebung der Formkörper werden Farbmittel zugesetzt. Hierbei können sowohl anorganische Pigmente und/oder natürliche Farbstoffe eingesetzt werden, einschließlich organischer Farbpigmente. Insbesondere kommen Indigo, Henna, Carotin, Chlorophyll, Carmin, Titandioxid, Eisenoxid, Kohle, Krapprot in Frage. Insbesondere sind auch lebensmittelrechtlich zugelassene Farbmittel bevorzugt.

Da organische Naturfarbstoffe teilweise sehr temperaturempfindlich sind und mineralische Naturfarbstoffe, wie beispielsweise Titandioxid, temperaturstabil, sind letztere wegen der thermoplastischen Verarbeitung der Komponentengemische bevorzugt.

Erfindungsgemäß werden auch Trennmittel als Verarbeitungshilfsmittel zum Entformen der aus den Komponentengemischen herzustellenden Formkörper eingesetzt, insbesondere wenn die Komponentengemische mittels Preßformen verarbeitet werden. Als Trennmittel kommen beispielsweise Stearinsäure und/oder deren Stearate oder natürliche Trennmittel, wie Orangenöl, Bienenwachs, Talg, Sonnenblumenöl, Rapsöl in Frage. Insbesondere werden Trennmittel auf natürlicher Basis eingesetzt. Je höher der Trennmittelanteil, umso brüchiger wird das Endprodukt. Aus diesem Grunde werden nur geringe Mengen an Trennmittel eingesetzt. Die als Trennmittel eingesetzten Materialien haben kein Bindevermögen, sie werden lediglich eingesetzt, um bei der Verarbeitung ein Verkleben zu verhindern. Das ist auch dann von Vorteil, wenn stark zum Kleben neigende Komponenten C eingesetzt werden.

Mit dem Verfahren gemäß der Erfindung können kompostierbare Einmalartikel für den Verpackungsbereich, Haushaltswarenbereich und als Behältnisse für technische Produkte sowie für den Außeneinsatz als Pflanzschalen für Gärten und Friedhöfe, sportliche Anlagen, Feuerwerksabdeckungen, Industriehalterung für Autoteile, Begräbnisurnen, Einwegteller, Einwegbecher, Kugelschreiberhülsen, Transportverpackungsdosen, Verpackungschips usw. hergestellt werden, die nicht nur die Anforderungen von mechanischer Stabilität, sondern auch Wasserfestigkeit für einen geforderten Mindestzeitraum aufweisen.

Je nach Schwergewicht der Zusammensetzung des Komponentengemisches werden Formkörper mit verschiedenen Eigenschaften, und zwar einerseits kurzlebige und schnell kompostierbare und andererseits längerlebige kompostierbare Formkörper erhalten, die jedoch jeweils eine außerordentlich hohe Wasserresistenz aufweisen.

Werden bei einem erfindungsgemäßen Verfahren Komponentengemische gemäß Anspruch 11 eingesetzt, so werden Formkörper mit einer Zugfestigkeit von 15 - 30 N/mm² und einem E-Modul von 5 - 15 kN/mm² erhalten, deren Wasseraufnahme bei Feuchtlagerung 40°C, 95 % r.F (relative Feuchte) während 144 Stunden weniger als 4 % beträgt und die im Freien eine Lebensdauer bei Bewitterung von mindestens 12 Wochen haben. Die Formkörper können durch Extrusion mit Profilwerkzeug oder durch Spritzgießen oder auch durch Formpressen hergestellt werden. Insbesondere eignen sich die vorgenannten Komponentengemische zur Verarbeitung durch Extrudieren und Spritzgießen. Da die hergestellten Formkörper eine geringe Feuchtigkeitsaufnahme zeigen, sind sie nicht nur für hochwertige Verpackungen, wie Cassetten, Behälter, geeignet, sondern auch für Blumentöpfe und ähnliche Anwendungen oder Lebensmittel-Einmalverpackungen oder Geschirr.

Um schnell abbaubare und kompostierbare Formkörper herzustellen, die nach kurzzeitigem Gebrauch in Kontakt mit Feuchtigkeit oder Flüssigkeit, d.h. kurzer Lebensdauer, möglichst umgehend zerfallen sollen, wird ein Verfahren vorgeschlagen, bei dem ein Komponentengemisch gemäß Anspruch 12 eingesetzt wird. Es werden Formkörper mit hoher Zugfestigkeit von 15 - 25 N/mm² und einem E-Modul von 8 bis 4 kN/mm² erhalten, die des weiteren eine glatte Oberfläche, die auch kratzfest ist, aufweisen.

Diese erfindungsgemäßen Komponentengemische werden durch Mischen der einzelnen Komponenten hergestellt und danach mittels Pressen zu Pellets verarbeitet und die Pellets anschließend, gegebenenfalls zerkleinert und dann thermoplastisch mittels Schneckenpressen und Extrusionswerkzeugen bzw. Spritzwerkzeugen zu Formkörpern verarbeitet bzw. mittels Formpreßverfahren zu Formkörpern verarbeitet. Bei der thermoplastischen Verarbeitung mittels Schneckenpressen bzw. Formpressen wird das Komponentengemisch bzw. die Pellets auf Temperaturen von 120 bis 160°C erwärmt. Mit dem erfindungsgemäßen Verfahren können kompostierbare Formkörper sowohl kontinuierlich als Folien, Platten, Profile, als auch diskontinuierlich hergestellt werden.

Die Weichmacherzusätze verbessern die thermoplastische Verarbeitbarkeit und verringern die Sprödigkeit der so hergestellten Formkörper.

Um eine unabhängige Fertigung der Formkörper aus den Pellets und der zum Herstellen der Formkörper vorgesehenen Pellets zu ermöglichen, werden Pellets aus Komponenten aufgebaut, die nach dem Herstellen in einer Pelletierpresse lagerfähig und transportfähig sind. Für eine Verarbeitung in Schneckenpressen ist es auch erwünscht, daß die Pellets granulierbar sind, d.h. zu Granulat verarbeit werden können.

Erfindungsgemäß werden hierfür bevorzugt Pellets vorgeschlagen, die eine Zusammensetzung gemäß Anspruch 14 aufweisen.

Aus diesen Komponenten wird durch Mischen ein homogenes Komponentengemisch hergestellt, das einem Mischapparat dosiert zugeführt wird und in dem Mischapparat gegebenenfalls unter Feuchtigkeitszugabe und Wärmezufuhr weiter gemischt und homogenisiert wird, um dann als Mischgut in eine Pelletierpresse mit Preßtrommel gefördert zu werden, in der unter Verfestigung des Komponentengemisches, jedoch unter Vermeidung einer vollständigen Aushärtung der beteiligten Komponenten, Pellets gebildet werden. Die Pellets weisen einen bevorzugt durchschnittlichen Durchmesser von 3 bis 5 mm auf und haben eine quadratische oder kugelige Form, meist in einheitlicher Größe. Diese Pellets sind nach Abkühlung transportfähig und zerfallen nicht ohne weiteres und können dann an beliebigen Orten in entsprechenden thermoplastischen Verarbeitungsmaschinen, wie Extrudern oder Formpressen, zu den gewünschten Formkörpern weiterverarbeitet werden. Bevorzugt werden die Pellets nach ihrer Herstellung Abkühlung noch zerkleinert oder granuliert, um besser rieselfähige, schüttfähige Partikel zur Einführung und Dosieren in den Extruder zu erhalten. Das Granulat bzw. die Partikel aus den Pellets sind nur wenig kleiner als die Pellets, weisen jedoch eine günstigere Gestalt zum Einführen in den Extruder auf.

Die erfindungsgemäßen Pellets sind sehr wasserresistent und daher besonders gut and lange lagerfähig bei entsprechender Aufbewahrung.

Bevorzugte Zusammensetzungen der Pellets sind den kennzeichnenden Merkmalen der Ansprüche 15 bis 24 entnehmbar.

Für den Transport von der Herstellung der Pellets zu einer Verarbeitungsstation, sofern diese nicht in-line erfolgt, werden die Pellets in feuchtigkeitsundurchlässigen Säcken oder dergleichen abgepackt und sind damit für einen längeren Zeitraum lager- und transportfähig.

Das Komponentengemisch ist extrem wasserbeständig, so daß zum Beispiel Formteile wie Blumentöpfe hergestellt werden können, die ständig mit Wasser in Berührung kommen. Der Vorteil der Komponentenmischung liegt in der Kompostierung, wenn der nötige Feuchtigkeitsgehalt, der Mineralstoffgehalt, die geeignete Temperatur und die entsprechenden Boden/Kompostbakterien vorhanden sind.

Die nachfolgenden Beispiele erläutern die Erfindung, die %-Angaben beziehen sich auf das Gewicht.

### Beispiel 1:

Aus den Komponenten

| | |
|---|---|
| A: | 30.0 % Holzschliff |
| B: | 15.0 modifizierte Stärke |
| C: | 35.0 % Kopal |
| D: | 17.4 % Talkum |
| E: | 0.0 % Weichmacher |
| F: | 0.4 % Eisenoxid, rot |
| G: | 2.2 % Calciumstearat und Vanille |

wird durch Mischen ein homogenes Komponentengemisch hergestellt. Dieses Komponentengemisch wird über einen Speiseapparat dosiert einem Mischapparat zugeführt und in dem Mischapparat gegebenenfalls unter Feuchtigkeitszugabe und Wärmezufuhr weitergemischt und dann das Mischgut in eine Pelletierpresse mit Preßtrommel gefördert und unter Verfestigung des Komponentengemisches, wobei lediglich eine teilweise Verkleisterung von möglicherweise vorhandenem unmodifiziertem Stärkeanteil stattfindet, Pellets gebildet. Hierbei werden Pellets durchschnittlich mit einem Durchmesser von 3 mm maximal bis 5 mm hergestellt in quadratischer oder kugeliger Form, meist in einer einheitlichen Größe. Diese Pellets werden auf Raumtemperatur abgekühlt, granuliert und dann das Granulat entweder mittels einer Formpresse mit Pressform zu einem gewünschten Formkörper geformt oder im Spritzgußverfahren mittels einer Schneckenpresse unter erneuter Plastizifierung des Granulats in eine Spritzgußform eingebracht und so der gewünschte Formkörper hergestellt. Hierbei können die Pellets bzw. das Granulat entweder kalt oder vorgewärmt in die Formpresse eingegeben werden, wobei die Preßform stets beheizt ist, so daß sowohl das kalte als auch das vorgewärmte Granulat dann bei den erforderlichen Preßtemperaturen von etwa 120 bis 160 C zu dem gewünschten Formkörper verpreßt wird, danach entformt wird und abkühlen kann. Auch bei erneuter Verarbeitung des Granulats bzw. der Pellets mittels einer Schneckenpresse werden diese auf Temperaturen bis zu höchstens etwa 160°C erwärmt und plastifiziert und dann das Material in eine Spritzgußform eingebracht und nach dem Erkalten entformt. Die hergestellten Formkörper, beispielsweise Pflanzschalen, sind wasserabweisend und weisen eine Zugfestigkeit von 22 N/mm², einen E-Modul von 10 kN/mm² und eine Wasseraufnahme bei Feuchtlagerung 40°C, 95 % relative Feuchte während 144 Stunden von weniger als 1 % auf und sind über mehrere Monate stabil im Einsatz.

Die Pflanzschale erträgt über 12 bis 16 Wochen die Feuchtigkeit und behält ihre Form. Die Kompostierung und der Zerfall treten erst nach längerer Einwirkungszeit von Feuchtigkeit, Mineralstoffgehalt, Temperatur und bei Vorhandensein entsprechender Boden-/Kompostbakterien ein.

### Beispiel 2:

Aus den Komponenten

| | |
|---|---|
| A: | 47.4 % Cellulose |
| B: | 10.0 % modifizierte Stärke |
| C: | 35.0 % Kopal |
| D: | 0.0 % Mineralstoffe |
| E: | 7.0 % Glycerin |
| F: | 0.4 % Henna |
| G: | 0.2 % Zitronenöl |

wird, wie in Beispiel 1 erläutert, Granulat gebildet und nachfolgend hieraus mittels einer Schneckenpresse im Spritzgußverfahren unter Erwärmung auf etwas über 140°C Formkörper, beispielsweise Verpackungsteile, hergestellt.

Die Verpackungsteile sind wasserabweisend und weisen ausreichend hohe Zugfestigkeit von 25 N/mm² auf.

### Beispiel 3:

Aus den Komponenten

| | |
|---|---|
| A: | 41.6 % Apfeltrester |
| B: | 10.0 % Polylactid |
| C: | 35.0 % Dammarharz |
| D: | 10.0 % Kreide |
| E: | 2.0 % Sorbit |
| F: | 0.4 % Kohlepulver |
| G: | 1.0 % Carnaubawachs |

wird, wie in Beispiel 1 erläutert, ein Granulat hergestellt.

Das Granulat wird im Spritzgußverfahren mittels einer Schneckenpresse unter Plastifizierung und Erwärmung auf etwas über 145°C zu Formkörpern, beispielsweise Verpackungsteilen, verarbeitet. Die hergestellten Formkörper sind sehr wasserabweisend, die Kompostierung setzt erst nach wochenlanger Einwirkung von Feuchtigkeit in Gegenwart von Boden-/Kompostbakterien ein, wobei dann allerdings bis auf die mineralischen Bestandteile eine vollständige Verrottung erfolgt.

### Beispiel 4:

Aus den Komponenten

| | |
|---|---|
| A: | 29.8 % Sägemehl und Chinaschilf |
| B: | 10.0 % modifizierter Naturrohstoff aus Aminocarbonsäuren, Dicarbonsäuren und Diolen |
| C: | 35.0 % Schellack |
| D: | 15.0 % Glasperlen |
| E: | 0.0 % Weichmacher |
| F: | 10.0 % Titandioxid |
| G: | 0.2 % Vanille |

wird ein Granulat, wie in Beispiel 1 erläutert, hergestellt.

Aus dem Granulat werden im Extrusionsverfahren mittels Plastifizieren unter Erwärmung in einer Schneckenpresse Platten hergestellt. Die Platten sind wasserabweisend und ausreichend stabil.

### Beispiel 5:

Aus den Komponenten

| | |
|---|---|
| A: | 30.6 % Zuckerrübenschnitzel |
| B: | 10.0 % modifizierte Stärke |
| C: | 35.0 % Kopal |
| D: | 15.0 % Silikat |
| E: | 7.0 % Butandiol |
| F: | 0.4 % Eisenoxid, braun |
| G: | 2.0 % Stearin |

wird, wie in Beispiel 1 beschrieben, Granulat hergestellt und mittels Schneckenpresse und Spritzgußform unter Plastifizierung auf etwa 140°C zu Einwegschalen verarbeitet.

## Patentansprüche

1. Verfahren zum Herstellen von kompostierbaren Formkörpern insbesondere zur Verwendung als Einmalartikel für Verpackungszwecke bzw. Bedarfsgegenstände im Haushaltswarenbereich und als Behältnisse, bei dem ein vorwiegend natürliche und/oder pflanzliche Rohstoffe enthaltendes Komponentengemisch hergestellt wird, aus dem vorgemischten Komponentengemisch unter Verfestigung mittels einer Pelletierpresse Pellets gebildet werden und die Pellets, gegebenenfalls nach Zerkleinerung, unter Anwendung von Druck und Wärme zu Formkörpern, gegebenenfalls mit nachfolgender Aushärtung verarbeitet werden, **dadurch gekennzeichnet**, daß ein aus folgenden Komponenten bereitetes Komponentengemisch zum Herstellen der Pellets eingesetzt wird:
A. 20 - 60 Gew.-%, vorzugsweise 25 bis 50 Gew.-% zellulosehaltige pflanzliche Fasern und/oder zellulosehaltige pflanzliche Abfall- bzw. Verarbeitungsrückstände in zerkleinerter Form
B. 1 - 20 Gew.-% modifizierte Naturrohstoffe, die thermoplastisch verarbeitbar und biologisch abbaubar sind,
C. 10 - 45 Gew.-% Harze und/oder Wachse auf natürlicher Basis
D. 0 - 30 Gew.-% mineralische Stoffe in zerkleinerter Form und/oder Kornform bzw. Staubform
E. 0 - 10 Gew.-% Weichmacher mit hygroskopischen Eigenschaften
F. 0 - 10 Gew.-%, vorzugsweise 0,1 - 2,0 Gew.-% Farbmittel
G. 0 - 2,5 Gew.-%, vorzugsweise 0,1 - 2 Gew.-% Trennmittel auf natürlicher Basis,
und aus den Pellets bzw. zu Granulat zerkleinerten Pellets unter erneuter Erwärmung und Plastifizierung auf eine Temperatur von etwa 120 bis 160°C Formkörper mit einer zeitlich begrenzten Wasserfestigkeit für einen dem Einwirken von Feuchtigkeit ausgesetzten Einsatz gebildet werden.

2. Verfahren nach Anspruch 1,
**dadurch gekennzeichnet**, daß ein aus folgenden Komponenten bereitetes Komponentengemisch mit
A: 25 - 50 Gew.-% zellulosehaltige pflanzliche Fasern und/oder Abfall- bzw. Verarbeitungsrückstände
B: 1 - 15 Gew.-% modifizierte Naturrohstoffe
C: 30 - 40 Gew.-% Harze und/oder Wachse auf natürlicher Basis
D: 5 - 20 Gew.-% mineralische Stoffe in feinteiliger Form
E: 0 - 10 Gew.-% Weichmacher mit hygroskopischen Eigenschaften
F: 0 -10 Gew.-% Farbmittel
G: 0,1-2,5 Gew.-% Trennmittel auf natürlicher Basis,
zum Herstellen der Pellets eingesetzt wird.

3. Verfahren nach Anspruch 1 oder 2,
**dadurch gekennzeichnet**, daß als Komponente A Fasern aus Stroh, Chinaschilf, Holzschliff, Cellulose, Bananenfasern, Hanf, Sisal, Maisstengel, Zuckerrohrstengel einzeln oder in Gemischen eingesetzt werden und/oder als Komponente A keine Stärke oder nur einen geringen Restgehalt an Stärke von bis zu höchstens 5 Gew.-%, vorzugsweise unter 2 Gew.-% enthaltende zellulosehaltige pflanzliche Abfallstoffe, wie Sonnenblumenextraktions-Schrot, Zuckerrübenschnitzel, Kaffeesatz, Sojaextraktions-Schrot, Kerne aus Obstrückständen, wie von Äpfeln, Birnen, Hagebutten, Trester, Schalen von Haselnüssen, Walnüssen, Mandeln, eingesetzt werden.

4. Verfahren nach einem der Ansprüche 1 bis 3,
**dadurch gekennzeichnet**, daß als modifizierte Naturrohstoffe Polysaccharide, Polysaccharidester, modifizierte Stärke, Stärkederivate, Stärkeester, oxidierte Stärken, wie Dialdehydstärken, Carbonsäuren, Hydroxycarbonsäuren, wie Polyhydroxycarbonsäuren, Hydroxyfettsäuren, Dicarbonsäuren, Aminocarbonsäuren, Diole, Polylactid-Polymer, Polylactid-Copolymere, einzeln oder in Gemischen (Blends) eingesetzt werden.

5. Verfahren nach einem der Ansprüche 1 bis 4,
**dadurch gekennzeichnet**, daß als Komponente C Harze bzw. Wachse mit einem Erweichungspunkt vorzugsweise unter 125 °C bzw. einem Schmelzpunkt unter 90°C eingesetzt werden.

6. Verfahren nach einem der Ansprüche 1 bis 5,
**dadurch gekennzeichnet**, daß als Komponente C Kolophonium und dessen Salze, Kopal, Naturkautschuk, Schellack, Carnaubawachs, Dammarharz, Japanwachs, Candelillawachs, Chicle-Gum, Mastix eingesetzt werden.

7. Verfahren nach einem der Ansprüche 1 bis 6,
**dadurch gekennzeichnet**, daß als Komponente D Silikate, Kalk, Glimmer, Glasperlen, Talkum, Quarzsand, Calciumcarbonate, Aluminiumoxid, Schiefer einzeln oder in Abmischungen eingesetzt werden.

8. Verfahren nach einem der Ansprüche 1 bis 7,
**dadurch gekennzeichnet**, daß als Komponente E Glycerin, Wasser, Butandiol, Zucker, D-Sorbit, Xylit, Citrate, Phosphate eingesetzt werden.

9. Verfahren nach einem der Ansprüche 1 bis 8,
**dadurch gekennzeichnet**, daß als Komponente F anorganische Pigmente und/oder natürliche Farbstoffe, wie Indigo, Henna, Carotin, Chlorophyll, Carmin, Titandioxid, Eisenoxid, Kohle, Krapprot eingesetzt werden.

10. Verfahren nach einem der Ansprüche 1 bis 9,
**dadurch gekennzeichnet**, daß als Komponente G Stearinsäure und/oder deren Stearate oder natürliche Trennmittel, wie Orangenöl, Bienenwachs, Talg, Sonnenblumenöl, Rapsöl eingesetzt werden.

11. Verfahren nach einem der Ansprüche 1 bis 10,
**dadurch gekennzeichnet**, daß aus einem aus folgenden Komponenten bereitetem Komponentengemisch
A: 25 - 45 Gew.-% zellulosehaltige pflanzliche Fasern
B: 5 - 15 Gew.-% modifizierte Naturrohstoffe
C: 30 - 40 Gew.-% Harze und/oder Wachse auf natürlicher Basis
D: 10 - 20 Gew.-% mineralische Stoffe in zerkleinerter Form und/oder Kornform bzw. Staubform
E: 0 - 5 Gew.-% Weichmacher mit hygroskopischen Eigenschaften
F: 0.05-10 Gew.-% Farbmittel
G: 0,2 -2,0 Gew.-% Trennmittel auf natürlicher Basis, Formkörper mit einer Zugfestigkeit von 15 - 30 N/mm² und einem E-Modul von 5 - 15 kN/mm² erhalten werden, deren Wasseraufnahme bei Feuchtlagerung 40°C, 95 % r.F. (relative Feuchte) 144 Stunden weniger als 4 % beträgt.

12. Verfahren nach einem der Ansprüche 1 bis 10,
**dadurch gekennzeichnet**, daß aus einem aus folgenden Komponenten bereiteten Komponentengemisch von
A: 30 - 50 Gew.-% zellulosehaltige pflanzliche Fasern
B: 2 - 10 Gew.-% modifizierte Naturrohstoffe
C: 25 - 40 Gew.-% Harze und/oder Wachse auf natürlicher Basis
D: 0 - 20 Gew.-% mineralische Stoffe in feinteiliger Form
E: 1 - 10 Gew.-% Weichmacher mit hygroskopischen Eigenschaften
F: 0 - 2,0 Gew.-% Farbmittel
G: 0 - 2,5 Gew.-% Trennmittel auf natürlicher Basis,
Formkörper mit einer Zugfestigkeit von 15 - 25 N/mm² und einem E-Modul von 4 bis 8 kN/mm² erhalten werden.

13. Verfahren nach einem der Ansprüche 1 bis 12,
**dadurch gekennzeichnet**, daß aus den Komponenten A bis G Pellets mit einem mittleren Durchmesser von 3 bis 5 mm hergestellt werden und die Pellets granuliert oder zerkleinert werden, bevor sie einer Schneckenpresse bzw. Preßform zur Plastifizierung unter Erwärmung und zur Verarbeitung zu den Formkörpern unter Anwendung von Druck und Wärme zugeführt werden.

14. Pellets zum Herstellen von kompostierbaren Formkörpern gemäß Verfahren nach einem der Ansprüche 1 bis 13, insbesondere zur Verwendung als Einmalartikel für Verpackungszwecke bzw. Bedarfsgegenstände im Haushaltwarenbereich und als Behältnisse aus einem vorwiegend pflanzliche und/oder natürliche Rohstoffe enthaltenden Komponentengemisch, aus dem unter Verfestigung der Komponenten mittels einer Pelletierpresse die Pellets hergestellt werden, wobei die Pellets granulierbar und thermoplastisch mittels Preßform oder Schneckenpresse verarbeitbar sind, **gekennzeichnet durch** folgende Zusammensetzung:
A. 20 - 60 Gew.-%, vorzugsweise 25 bis 50 Gew.-% zellulosehaltige pflanzliche Fasern zellulosehaltige pflanzliche Abfall- bzw. Verarbeitungsrückstände in zerkleinerter Form
B. 1 - 20 Gew.-% modifizierte thermoplastisch verarbeitbare, biologisch abbaubare Naturrohstoffe
C. 10 - 45 Gew.-% Harze und/oder Wachse auf natürlicher Basis
D. 0 - 30 Gew.-% mineralische Stoffe in zerkleinerter Form und/oder Kornform bzw. Staubform
E. 0 - 10 Gew.-% Weichmacher mit hygroskopischen Eigenschaften
F. 0 - 10 Gew.-%, vorzugsweise 0,1 - 2,0 Gew.-% Farbmittel
G. 0 - 2,5 Gew.-%, vorzugsweise 0,1 - 2 Gew.-% Trennmittel auf natürlicher Basis.

15. Pellets nach Anspruch 14,
**dadurch gekennzeichnet**, daß als Komponente A Fasern aus Stroh, Chinaschilf, Holzschliff, Cellulose, Bananenfasern, Sägemehl, Hanf, Sisal, Maisstengel, Zuckerrohrstengel einzeln oder in Gemischen enthalten ist und/oder keine Stärke oder nur geringen Restgehalt an Stärke von höchstens 5 Gew.-%, vorzugsweise unter 2 Gew.-% , enthaltende Füllstoffe, wie Triticale, Sonnenblumenextraktions-Schrot, Zuckerrübenschnitzel, Kaffeesatz, Sojaextraktions-Schrot, Kerne aus Obstrückständen, wie von Äpfeln, Birnen, Hagebutten, Trester, Schalen von Haselnüssen, Walnüssen, Mandeln, enthalten sind.

16. Pellets nach Anspruch 14 oder 15,
**dadurch gekennzeichnet**, daß die Komponente B als modifizierte Naturrohstoffe Polysaccharide, Polysaccharidester, modifizierte Stärke, Stärkederivate, Stärkeester, oxidierte Stärken, wie Dialdehydstärken, Carbonsäuren, Hydroxycarbonsäuren, wie Polyhydroxycarbonsäuren, Hydroxyfettsäuren, Dicarbonsäuren, Aminocarbonsäuren, Diole, Polylactid-Polymer, Polylactid-Copolymere, einzeln oder in Gemischen (Blends) enthält.

17. Pellets nach einem der Ansprüche 14 bis 16,
**dadurch gekennzeichnet**, daß als Komponente C Harze bzw. Wachse mit einem Erweichungspunkt vorzugsweise unter 125°C bzw. einem Schmelzpunkt unter 90°C enthalten sind, wie Kolophonium und dessen Salze, Kopal, Naturkautschuk, Schellack, Carnaubawachs, Dammarharz, Japanwachs, Candelillawachs, Chicle-Gum, Mastix.

18. Pellets nach einem der Ansprüche 14 bis 17,
**dadurch gekennzeichnet**, daß als Komponente D Silikate, Kalk, Glimmer, Glasperlen, Talkum, Quarzsand, Calciumcarbonat, Aluminiumoxid, Schiefer einzeln oder in Abmischungen enthalten ist.

19. Pellets nach einem der Ansprüche 14 bis 18,
**dadurch gekennzeichnet**, daß als Komponente E Glycerin, Wasser, Butandiol, Zucker, D-Sorbit, Xylit, Citrate, Phosphate enthalten ist.

20. Pellets nach einem der Ansprüche 14 bis 19,
**dadurch gekennzeichnet**, daß als Komponente F anorganische Pigmente und/oder natürliche Farbstoffe enthalten sind, wie Indigo, Henna, Carotin, Chlorophyll, Carmin, Titandioxid, Eisenoxid, Kohle, Krapprot.

21. Pellets nach einem der Ansprüche 14 bis 21,
**dadurch gekennzeichnet**, daß als Komponente G Stearinsäure und/oder deren Stearate und/oder natürliche Trennmittel, wie Orangenöl, Bienenwachs, Talg, Sonnenblumenöl, Rapsöl enthalten sind.

22. Pellets nach einem der Ansprüche 14 bis 21,
**dadurch gekennzeichnet**, daß als Komponenten
A. 30 - 50 Gew.-% zellulosehaltige pflanzliche Fasern und/oder zellulosehaltige pflanzliche Abfall- bzw. Verarbeitungsrückstände in zerkleinerter Form
B. 2 - 10 Gew.-% modifizierte thermoplastisch verarbeitbare biologisch abbaubare Naturrohstoffe
C. 25 - 40 Gew.-% Harze und/oder Wachse auf natürlicher Basis
D. 0 - 20 Gew.-% mineralische Stoffe in zerkleinerter Form und/oder Kornform bzw. Staubform
E. 1 - 10 Gew.-% Weichmacher mit hygroskopischen Eigenschaften
F. 0 - 2,0 Gew.-% Farbmittel
G. 0,1 - 2,5 Gew.-% Trennmittel auf natürlicher Basis, enthalten sind.

23. Pellets nach einem der Ansprüche 14 bis 21,
**dadurch gekennzeichnet**, daß als Komponenten
A. 25 - 45 Gew.-% zellulosehaltige pflanzliche Fasern
B. 5 - 15 Gew.-% modifizierte biologisch abbaubare Naturrohrstoffe
C. 30 - 40 Gew.-% Harze und/oder Wachse auf natürlicher Basis
D. 10 - 20 Gew.-% mineralische Stoffe in zerkleinerter Form und/oder Kornform bzw. Staubform
E. 0 - 5 Gew.-% Weichmacher mit hygroskopischen Eigenschaften
F. 0 - 10 Gew.-% Farbmittel
G. 0,2 - 2,5 Gew.-% Trennmittel auf natürlicher Basis, eingesetzt sind.

24. Pellets nach einem der Ansprüche 14 bis 21,
**dadurch gekennzeichnet**, daß als Komponenten
A. 30 - 50 Gew.-% zellulosehaltige pflanzliche Fasern und/oder zellulosehaltige pflanzliche Abfall- bzw. Verarbeitungsrückstände in zerkleinerter Form
B. 1- 15 Gew.-% modifizierte thermoplastisch verarbeitbare biologisch abbaubare Naturrohstoffe
C. 30 - 40 Gew.-% Harze und/oder Wachse auf natürlicher Basis
D. 5 - 20 Gew.-% mineralische Stoffe in zerkleinerter Form und/oder Kornform bzw. Staubform
E. 0 - 10 Gew.-% Weichmacher mit hygroskopischen Eigenschaften
F. 0 - 10 Gew.-% Farbmittel
G. 0.1 - 2.5 Gew.-% Trennmittel auf natürlicher Basis, eingesetzt sind.
